# EUROPEAN PATENT APPLICATION

(11) **EP 2 801 252 A1**
(43) Date of publication of application: **12.11.2014**
(21) Application number: 13167343.6
(22) Date of filing: 10.05.2013
(51) Int. Cl.: A01K 1/03

(54) **Outdoor protective structure for cats**

(71) Applicant: Hazer, C. Lee, San Diego, CA 92177 (US)
(72) Inventor: Hazer, C. Lee, San Diego, CA 92177 (US)
(74) Representative: Steimle, Josef

(57) **Abstract**

The present invention is used for outdoor protection of cats from predators and inclement weather conditions. A house of general rectangular shape has three vertical walls 22,24,26, attached between a top floor 30 and a bottom floor 32 to form a chamber that may be closed by a door 20. At least one intermediate floor 30,32,34,36 is attached between and generally parallel to the top and bottom floors. The multiple floors may have an opening 60,62,64,66 formed at an edge or adjacent with an edge member so that the openings of adjacent floors are opposed and not aligned. A roof 40 may be attached above the top floor and spaced apart to allow entry and exit of cats and protection from weather. A foundation 52 with an access opening 52 is attached to the bottom floor and may subtend therefrom.

## Description

### BACKGROUND OF THE INVENTION

This invention relates to structures that can house cats in an outdoor environment to protect them from predatory animals and inclement weather conditions. The new structure or house allows cats to enter and exit through openings that are formed and arranged as part of the structure to inhibit larger animals, such as, coyotes, wolves, bobcats and the like that may normally prey on small animals, from entering the structure. The internal structure of the house allows movement of cats between chambers within the house, but inhibits movement of larger, less flexible animals.

Playhouses, pet furniture, climbing structures and the like may be known for use by cats when in human building environments such as houses, apartments and other buildings. The pet structures may be constructed of paperboard or cardboard that allow fold lines for collapsing and folding the structure; generally open to the environment or not structured to limit access of animals other than cats; and lack inclement weather protection structure.

For small animals such as squirrels, birds and the like, outdoor house structures may be known for mounting on trees or poles to limit access by predators that may even be cats. Such houses are usually constructed with a roof and one or more small holes for the user animal to gain access, but to inhibit larger predators from entering the house. Internally such houses are usually open chamber structures and they are designed to be mounted in an elevated position such as on a tree, the side of a structure, or on a pole. Entry through holes or openings may be through side walls or floor walls in the structure. Based on the animal's very small size and the elevated position of the house, larger animals such as dogs or coyotes cannot put their heads, mouths or legs through the openings.

### SUMMARY OF THE INVENTION

The present invention is directed to structures for outdoor protection of cats from predators and inclement weather conditions. A house of generally rectangular shape may have three vertical walls attached between a top floor and a bottom floor to form a chamber that may be closed by a door. At least one intermediate floor may be attached between and generally parallel to the top and bottom floors. The multiple floors may have an opening formed at an edge so that the openings of adjacent floors are opposed and not aligned. A roof may be attached above the top floor and spaced apart to allow entry and exit of cats and protection from weather. A foundation with an access opening may be attached to the bottom floor and may subtend therefrom.

These and other features, aspects and advantages of the present invention will become better understood with reference to the following drawings, description and claims.

### BRIEF DESCRIPTION OF THE DRAWINGS

Figure 1 illustrates a front perspective elevation view of an outdoor protective structure with the access door open according to an embodiment of the invention;
Figure 2 illustrates a front perspective elevation view of an outdoor protective structure with the access door closed according to an embodiment of the invention;
Figure 3 illustrates a back elevation view of an outdoor protective structure according to an embodiment of the invention;
Figure 4 illustrates a bottom plan view of an outdoor protective structure according to an embodiment of the invention;
Figure 5 illustrates a front perspective elevation view of an outdoor protective structure with the access door open according to an embodiment of the invention;
Figure 6 illustrates a bottom perspective view of the bottom floor and the posts of an outdoor protective structure according to an embodiment of the invention;
Figure 7 illustrates a partial section view of a front door of an outdoor protective structure according to an embodiment of the invention;
Figure 8 illustrates a back perspective elevation of an outdoor protective structure according to an embodiment of the invention.

### DETAILED DESCRIPTION

The following detailed description represents the best currently contemplated modes for carrying out the invention. The description is not to be taken in a limiting sense, but is made merely for the purpose of illustrating the general principles of the invention.

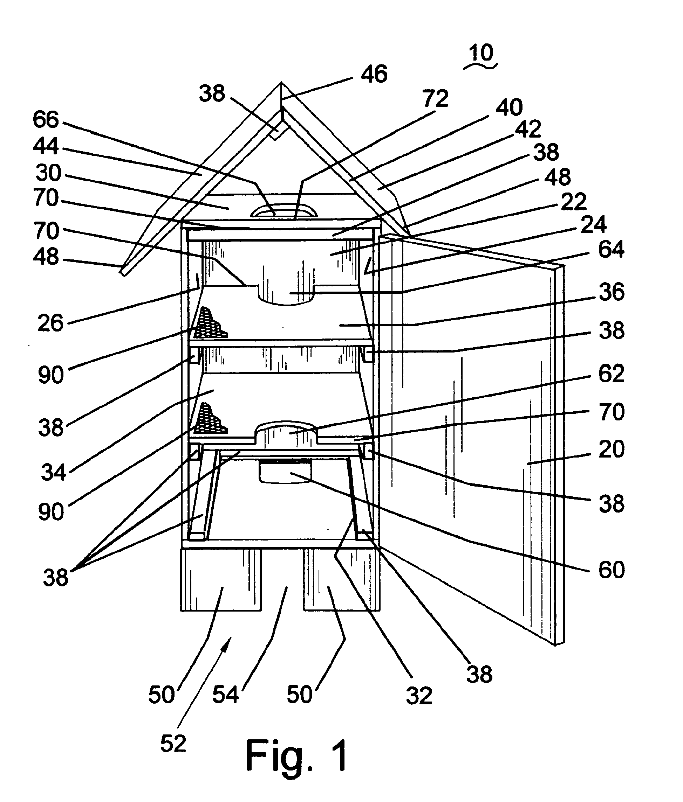

Referring to Figures 1 through 5, an outdoor protective structure or house 10 may have four vertical walls, a top floor 30 and a bottom floor 32 assembled in a generally rectangular box form. There may be one or more floors intermediate and approximately parallel to the top floor 30 and the bottom floor 32 to form a plurality of vertically separated and parallel panels 12 that may include a roof 40 above the top floor 30. A peaked or inclined roof 40 may be attached to overlie and be spaced apart from the top floor 30 and a foundation 52 may be attached to and subtend below the bottom floor 32.

The vertical walls may be a right side wall 24 and a left side wall 26 positioned parallel and spaced apart to extend from the bottom floor 32 to the top floor 30. A back side wall 22 may be attached at its edges 70 to the right and left side walls 24, 26 and to the top and bottom floors 30, 32. The front side wall may be in the form of a door panel 20 that may be attached to the right or left side wall 24, 26 by hinges 80. A latch 82, clasp or other suitable fastener may be used to fasten the door 20 to a catch 84 opposite the hinges 80 in a closed position and to allow opening for access to the interior of the house 10. The openings in the top and bottom floors 30, 32 may be generally rectangular with sides of approximately 6 ½ to 8 inches.

The foundation 52 may be formed of rectangular pillars 50 or posts appropriately attached to the bottom floor 32. The pillars 50 may be spaced apart to form openings 54 that are an appropriate width to allow a cat to pass through. It has been found by experiment that a foundation 52 with a height of approximately 6 ½ to 9 inches and and spacing between pillars 50 of 6 ½ inches or wider is good for cat safety and comfort.

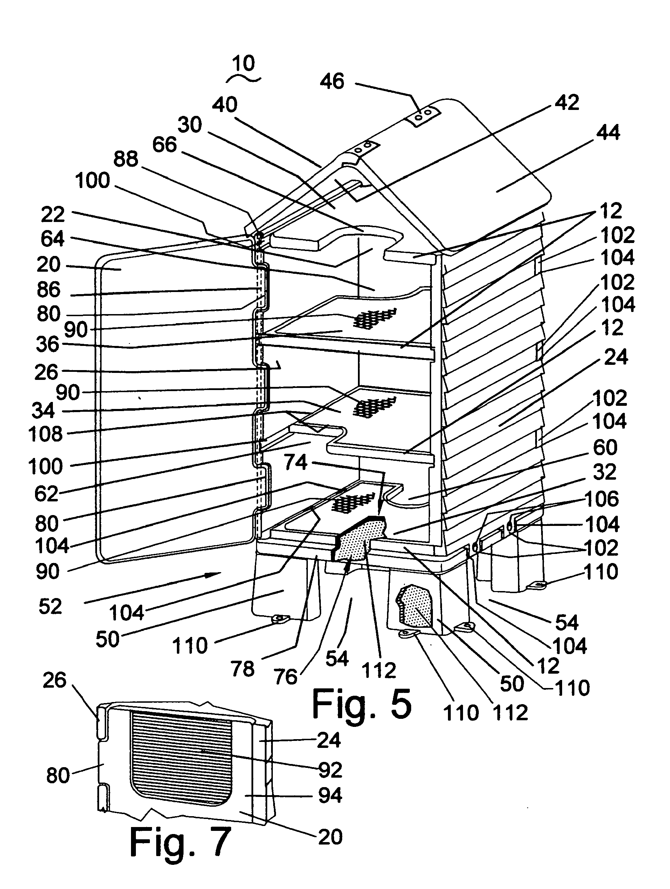

The roof 40 may be formed of a right side panel 42 and a left side panel 44 attached at an edge to form a central ridge 46. The side panels 42, 44 may be attached adjacent to outside edges 48 to the top floor 30, see Figure 1, or to upwardly extending side walls 24, 26, see Figure 5. The incline of the side panels 42, 44 may be sufficient to position the central ridge 46 approximately 9 to 10 inches above the top floor 30.

A first intermediate floor 34 may be appropriately attached to the right side wall 24 and the left side wall 26 positioned to be generally parallel to and spaced apart from the bottom floor 32. A second intermediate floor 36 may also be appropriately attached to the right side wall 24 and the left side wall 26 positioned to be generally parallel to and spaced apart from the top floor 30 and from the first intermediate floor 34. The spacing between floors 30, 32, 34, 36 has been found by experiment to be approximately 8 to 11 inches for good cat safety and comfort. A preferable spacing for typical cat size has been found by experiment to be approximately 9 inches between floors 32, 34 to encourage cats to move up one floor and not remain on the bottom floor thus avoiding crowding at the structure 10 entry point. The spacing between floors 34, 36 is approximately 10 inches and between floors 36, 30 is approximately 9 ½ inches to allow reasonable space for movement and resting of the cats. In the instance of larger or fat cats the spacing may be modified to accommodate for extra space.

Each of the floors 30, 32, 34, 36 may have an opening formed or cut therein. The openings are illustrated as formed at one edge or corner of each of the floors. The openings may also be formed adjacent an edge of a floor with a portion of the floor forming the edge member 72 as illustrated in the top floor 30 in Figure 1. This structure may be used to increase structural support of the panels 12 at an edge 70 or to position an opening away from an edge 70 for better access. Forming openings at edges 70 or corners may allow for ease of manufacture of the floor elements of the house 10. When the floors 30, 32, 34, 36 are installed in the house 10, the openings 60, 62, 64, 66 are positioned to be opposed between each adjacent floor or panel 12 level. In the illustrated embodiment the bottom floor opening 60 is adjacent the back wall 22, the first floor opening 62 is adjacent the front wall 20, the second floor opening 64 is adjacent the back wall 22, and top floor opening 66 is adjacent the front door panel 20. The floors may be supported on the walls by brackets or wood beams 38. Slots 100 may also be formed in the side walls 24, 26 and back wall 22 for the floors to be slidably inserted for support. The various members may be fastened or attached by fasteners such as screws, pin, nails, latching or catch devices, as well as adhesive and the like. The arrangement of the openings is important since it makes the movement into the house and between floors difficult for animals to traverse except for cats that as animals are flexible and of a certain size. The structure does not include openings in vertical walls because that would make access into chambers of the house 10 easier for larger animal's mouth, paws and the like.

A size of house 10 that has been found by experiment to be very functional in an environment where cats roam outdoors and wild animals such as coyotes are present is one in which the house has approximately 2 feet by 3 feet width of sides. The foundation 52 or pillars 50 may be treated with chemical to inhibit rot or other degradation when the house may be constructed of wood and the house 10 may be painted or coated for protection from the environment. The house structure may be formed of plywood, pressboard and the like. The material used to construct the house should result in a house 10 with appropriate weight to be stable relative to environmental elements such as types of animals or weather, for example, a weight of at least 70 pounds has been found by experiment to be useful. Also, the house 10 may be attached or in some manner anchored to an outdoor structure or foundation to aid in maintaining the house 10 in position when an environmental element or animal may impact the house.

The house 10 may be easily shipped or transported if the elements are formed of wood or plastic material for a buyer or user to purchase and assemble themselves.

Referring to Figures 1 and 5 through 8, the house 10 may also be constructed of other suitable material such as plastic. Molded plastic members may be used in place of the illustrated members in Figure 1. The elements of both houses are relatively the same to allow safety and comfort of the cats. The structure illustrated in Figures 5 though 8 illustrate floor members 30, 34, 36 slidably supported in slots 100 in side walls 24, 26. The bottom floor 32 is illustrated as supporting the vertical walls 22, 24, 26 that have tab members 102 extending into attachment slots 104 and fastened by screws 106 to the bottom floor 32. The back wall 22 may also have side extending tab members 102 extending into attachment slots 104 in the vertical edges of the side walls 24, 26 for attachment with screws 106 for structural strength. A lower rear tab 116 may extend downward at the bottom edge of the rear wall 22 to provide additional structure to increase protection of the bottom floor opening 60. This tab 116 may not be necessary if an edge member 72 is part of the opening 60.

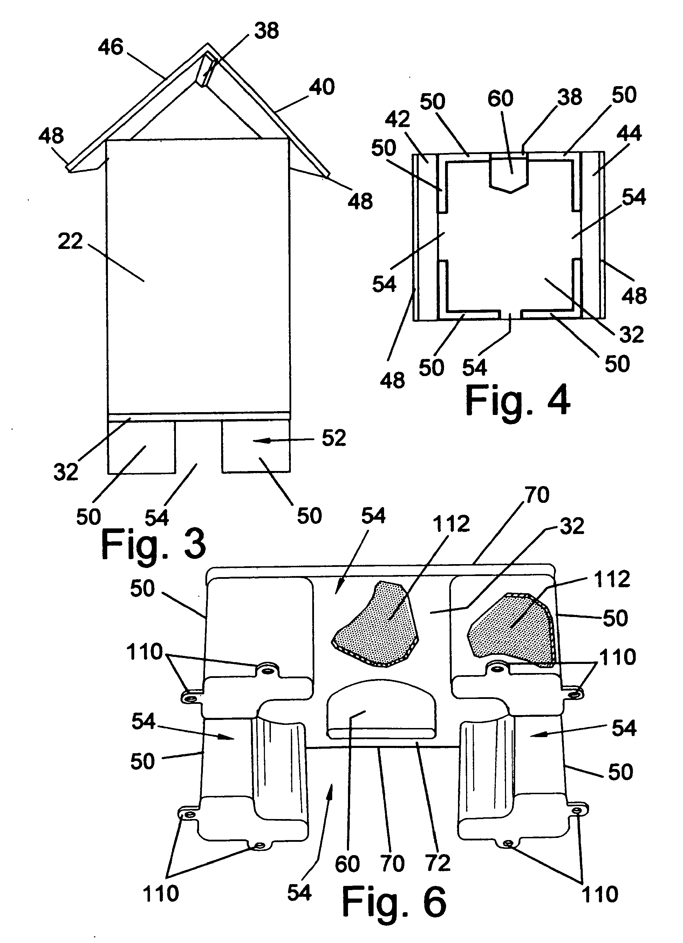

The plastic members may be formed with a hollow interior as illustrated in Figure 5 wherein the walls, floors, roof and posts have opposed side walls 74, 76 and a peripheral wall edge 78. Such construction in the size of house 10 for use with cats may produce a weight of approximately 50 pounds. Sand or the like granular material may be contained in the hollow interior of the posts 50 and the bottom floor 32, or the back wall 22, right side wall 24 and left side wall 26 to produce a heavier house 10 for stability. The weight may be 100 pounds or more and produce a lower center of gravity for the house 10 as compared to a wood structure of 70 pounds. The posts 50 may be generally rectangular structure or may be rectangular structure with an inward facing concave surface as best seen in Figure 6. While a concave surface is illustrated in Figure 6, a straight wall or other curved surface may also be used to allow more space for cats to enter the bottom floor opening 60. The posts 50 may be elongated in width to hold more sand and vary the width of the access openings 54.

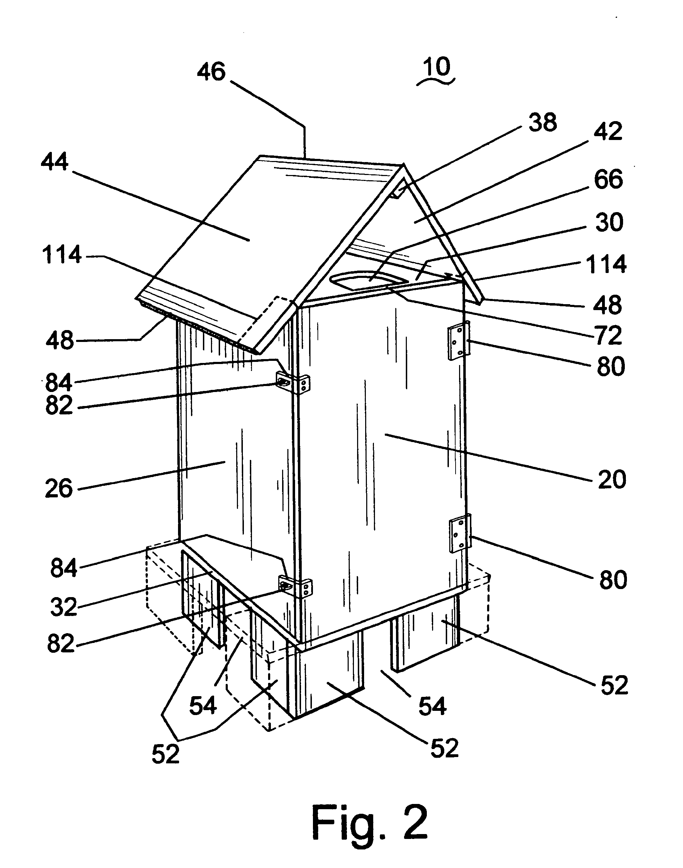

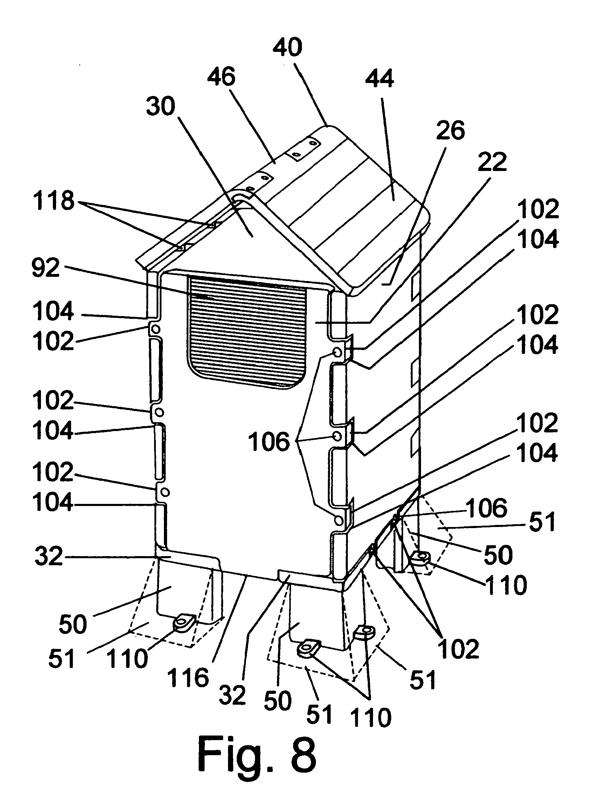

Carpet 90 may be attached by adhesive or other fastening method to interior floors 30, 32, 34, 36. In the instance of the use of plastic floors and wall slots 100 there may be a recessed portion 108 formed in the floor to receive the carpet 90 material. There may be a roughened surface 92 formed in the outside upper surface 94 of the front wall 20 and back wall 22, as illustrated in Figures 7 and 8, to aid cats in exiting and entering from the top of the house 10. There may be anchor brackets 110 attached to wood posts 50 or formed as part of plastic posts 50 for use in anchoring a house 10 foundation 52 to a surface structure. If the outside edges 48 of the roof 40 extend over the access door 20 a corner portion 114 of the side panels 42, 44 may be removed to allow opening rotation of door 20, see Figure 2. The roof 40 for a plastic house 10 may have roof attachment brackets 118 molded as part of the roof 40 to strengthen the attachment to the side walls 24, 26. The top edges of the side walls 24, 26 may also have increased material thickness for strengthening the roof 40 attachment to avoid damage or separation should someone attempt to move the house 10 by gripping the roof 40.

Referring to Figures 2 and 8, for additional stability of the house 10 the bottom floor 32 may be extended outwardly in size relative to the length and width of the house structure as illustrated in dashed line form in Figure 2. The illustration represents a bottom floor extension outwardly from the right side wall 24 and left side wall 26. The bottom floor 32 may also be extended outwardly from the front wall 20 or back wall 22. The posts 50 may be formed with the outward facing walls 51 slanted from the bottom floor 32 away from the vertical plane of the side walls of the house as illustrated in dashed line form in Figure 8. This may allow more stability to inhibit the tipping over of the house 10 due to the wider footprint of the posts 50 and may allow additional space for containing sand in the posts 50.

While the invention has been particularly shown and described with respect to the illustrated embodiments thereof, it will be understood by those skilled in the art that the foregoing and other changes in form and details may be made therein without departing from the spirit and scope of the invention.

## Claims

1. A structure for outdoor protection for cats comprising:
a house of generally rectangular shape that has three vertical walls that are attached to and extend between a bottom floor and a top floor to form a chamber therein with an open side that is closed by a door;
at least one intermediate floor attached to said three vertical walls disposed to be generally parallel to and spaced apart from said bottom floor and said top floor;
each of said bottom floor, said top floor and said at least one intermediate floor having an opening therein adjacent an edge wherein said at least one intermediate floor opening is disposed opposed said bottom floor opening and said top floor opening;
a roof spaced above said top floor and attached to an upper portion of said house; and
a foundation having an access opening therein disposed for access to said bottom floor opening is attached to and subtending from said bottom floor.

2. The structure as in claim 1 wherein
- said bottom floor, a first intermediate floor, said top floor and said roof are spaced apart between adjacent floors approximately 8 inches to 11 inches; and/or
- each of said floor openings and said access opening are generally rectangular in shape with sides of approximately 6 1/2 inches to 9 inches.

3. The structure as in claim 2 wherein:
a second intermediate floor having an opening therein adjacent an edge is attached to said three vertical walls disposed between, parallel to and spaced apart from said top floor and said first intermediate floor; and
said bottom floor opening, said first intermediate floor opening, said second intermediate floor opening and said top floor opening are disposed opposed for vertically adjacent floors.

4. The structure as in claim 1 wherein:
a first side wall and a second side wall spaced apart and aligned generally parallel and that are attached to and extend between said bottom floor having said bottom floor opening therein at a back edge and said top floor having a top opening therein at a front edge;
a back wall attached at each side edge to each one of said first side wall and said second side wall;
a front wall in the form of a door panel for said door that is attached at a first side edge by a hinge to one of said first side wall and said second side wall and at a second side edge has a fastener to engage one of said first side wall and said second side wall opposite said hinge; and
a first intermediate floor having a first opening therein at a front edge attached to said first side wall and said second side wall.

5. The structure as in claim 4 wherein:
a second intermediate floor having a second opening therein at a back edge is attached to said first side wall and said second side wall disposed between, parallel to and spaced apart from said top floor and said first intermediate floor; and
said bottom floor opening, said first opening, said second opening and said top opening are disposed opposed for vertically adjacent floors.

6. The structure as in claim 5 wherein
- said bottom floor, said first intermediate floor, said second intermediate floor, said top floor and said roof are spaced apart between adjacent floors approximately 8 inches to 11 inches; or
- each of said access opening, said bottom floor opening, said first opening, said second opening and said top opening are generally rectangular in shape with sides of approximately 6 ½ inches to 8 inches.

7. The structure as in claim 4 wherein said roof comprising a right side panel and a left side panel attached at an edge to form a central ridge wherein said central ridge is spaced apart from said top floor approximately 8 inches to 10 inches when said right side panel and said left side panel are inclined and attached adjacent to an outside edge to said top floor.

8. The structure as in claim 4 wherein
- said foundation is formed of a plurality of pillars wherein at least two pillars of said plurality of pillars are spaced apart at least 5 inches and said plurality of pillars have a height of approximately 6 ½ inches to 9 inches; and/or
- said bottom floor and said top floor have a length of at least approximately 2 feet and a width of at least approximately 2 feet, and said house is construction of a material for said house to weight at least 70 pounds.

9. The structure as in claim 8 wherein said plurality of pillars are a narrow rectangular shape and are attached at an edge adjacent to the peripheral edge of said bottom floor.

10. The structure as in claim 5 wherein:
said first side wall, said second side wall, said back wall, said front wall, said bottom floor, said first intermediate floor, and said second intermediate floor are formed of molded plastic members of hollow construction with opposed side walls and a peripheral wall edge; and
said foundation is formed of a plurality of posts of molded plastic of hollow construction that have a height of approximately 6 ½ to 9 inches.

11. The structure as in claim 10 wherein
- said plurality of posts have a granular material disposed therein; and/or
- said bottom floor has a granular material disposed therein.

12. The structure as in claim 10 wherein said roof is formed of a molded plastic material.

13. The structure as in claim 10 wherein said plurality of posts have a generally rectangular shape with a concave vertical surface.

14. The structure as in claim 10 wherein said bottom floor, said first intermediate floor, and said second intermediate floor have a recessed portion in an upper wall of said opposed side wall with a carpet disposed and attached in said recessed portion.

15. The structure as in claim 7 wherein said roof is attached to said first side wall and said second side wall at a top thereof.
